# EUROPEAN PATENT APPLICATION

(11) **EP 3 536 296 A1**
(43) Date of publication of application: **11.09.2019**
(21) Application number: 19158657.7
(22) Date of filing: 21.02.2019
(51) Int. Cl.: A61H 3/00, A61H 1/02

(54) **LEG BELT TO EFFECTIVELY SUPPORT THE LEG AND WEARABLE ASSISTIVE DEVICE HAVING THE SAME**

(30) Priority: 22.02.2018 KR 20180021296; 12.03.2018 KR 20180028766; 23.07.2018 KR 20180085552; 12.09.2018 US 201862730399 P; 12.09.2018 US 201862730400 P; 12.09.2018 US 201862730412 P; 12.09.2018 US 201862730420 P
(71) Applicant: LG Electronics Inc., SEOUL (KR)
(72) Inventor: NAM, Bohyun, 08592 Seoul (KR); PARK, Kyu Tae, 08592 Seoul (KR); SON, Jung Kyu, 08592 Seoul (KR); YU, Seonil, 08592 Seoul (KR); LEE, Wonjun, 08592 Seoul (KR)
(74) Representative: Vossius & Partner Patentanwälte Rechtsanwälte mbB

(57) **Abstract**

A wearable assistive device may include a main frame provided on a waist or pelvis of a user, a leg assembly that is formed to be extended downward along a leg of the user at an end of the main frame, and a foot assembly that is installed at an end of the leg assembly to support a foot of the user. The leg assembly may include a leg frame connected to the main frame and the foot assembly, and a leg belt mounted on the leg frame. The leg belt may include a main support, a first support that is coupled to a side of the main support by a hinge joint, and a second support that is coupled to another side of the main support by a hinge joint.

## Description

### BACKGROUND

### 1. Field

This application relates to assistive and/or rehabilitative technology.

### 2. Background

In assistive and/or rehabilitative technology a wearable assistive device such as a wearable robot or robotic exoskeleton may assistor augment a movement of a user by providing an assistive force at various joints. The assistive force may be generated from a driving apparatus such as a motor.

The wearable assistive device may have a multi-joint skeletal structure that may play a role in assisting a power or strength of the user, and may assist a user in walking. The driving apparatus, the multi-joint skeletal structure, and a multi-frame structure may help to efficiently transmit the assistive force.

Such a wearable assistive device may be worn on and secured to a waist, a leg, and/or a foot of the user. A detachment mechanism that secures the wearable assistive device to the user is an important factor that determines the efficiency and convenience of use.

A conventional wearable device is disclosed in Korean Patent Application No. 2014-0121371 (wearable robot) and US Patent Application No. 2016-0331624 (wearable action-assistance device). The wearable robot according to the related art will be described with reference to the above.

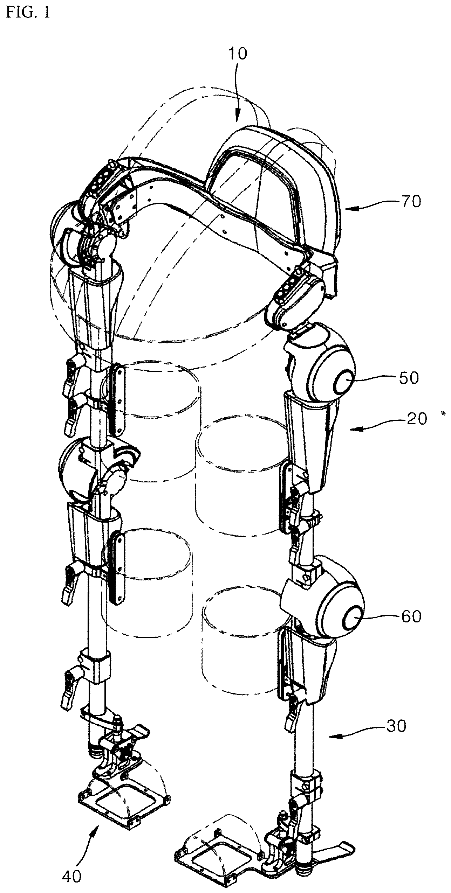

FIG. 1 is a configuration view of a wearable robot, which may include a wearable member or waist support 10, a thigh or femur support 20, a lower leg support 30, a foot support 40, a first driving device or first drive 50, a second driving device or second drive 60, and a control device or controller 70.The waist support 10 may be worn on a waist. The thigh support 20 may be worn on a thigh of the user. The thigh support 20 may be rotatably connected to the waist support 10. A lower leg support 30 may be rotatably connected to a lower end of the thigh support 20. A foot support 40 may be rotatably connected to a lower end of the lower leg support 30 and may be worn on a foot. The first drive 50 may include a motor and may rotate the thigh support 20. The second drive 60 may include a motor and rotates the lower leg support 30.

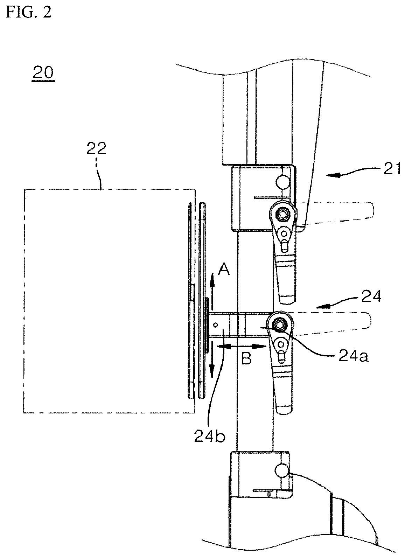

FIG. 2 is a configuration view of a thigh support of a waist support in the wearable robot shown in FIG. 1. The thigh support 20 of the waist support 10 may include a femoral support body or support frame 21, a femur wear body or thigh cuff 22, and a femur wear adjusting unit or thigh adjustment mechanism 24.

The thigh cuff 22 may be mounted on the thigh adjustment mechanism 24. The thigh adjustment mechanism 24 may be coupled to the thigh support frame 21 such that it can move the thigh cuff 22 in an upward direction and a downward direction (shown by an arrow A). Accordingly, a position of the thigh cuff 22 may be adjusted on the user.

The thigh adjustment mechanism 24 may include a first thigh horizontal movement bar or first adjustment bar 24a and a second thigh horizontal movement bar or second adjustment bar 24b. The second adjustment bar 24b may be movably coupled to the first adjustment bar 24a. By a movement of the second adjustment bar 24b about the first adjustment bar 24a, the thigh adjustment mechanism 24 may be adjustable in length in a horizontal direction (indicated by an arrow B). Accordingly, the thigh cuff 22 may be moved in a leftward direction and a rightward direction. Further, the thigh cuff 22 may be coupled to the thigh adjustment mechanism 24 by a hinge joint so as to be rotatable.

However, as the adjustment mechanism 24 is moved in an upward, downward, leftward, and rightward directions, the wearable robot may only include a configuration in which a position of the thigh cuff 22 is linearly adjusted. Further, the wearable robot may not include a supporting structure that is varied in a thickness direction of a leg of the user. Accordingly, the wearable robot may not stably support the leg of the user.

Further, the wearable robot may not include a stopper structure to limit a displacement of the adjustment mechanism 24. Accordingly, the wearable robot may de stabilize or fatigue the user due to an excessive displacement of the adjustment mechanism 240.

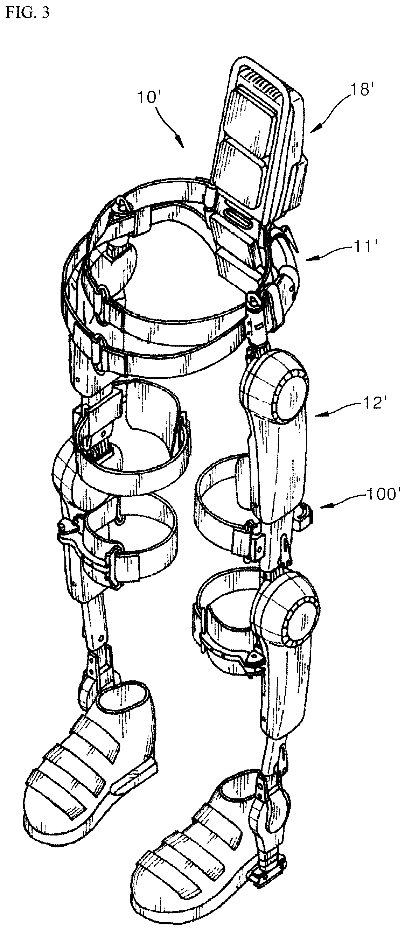

FIG. 3 is a configuration view of a wearable action-assisting device or wearable robot according to the related art. A wearable action-assisting device 10' may include a waist frame 11', a lower frame or leg frame 12' and a control portion or back frame 18'. The leg frame 12' and the back frame 18' may be coupled to the waist frame 11'. A thigh cuff or thigh support 100' may be mounted on the leg frame 12'.

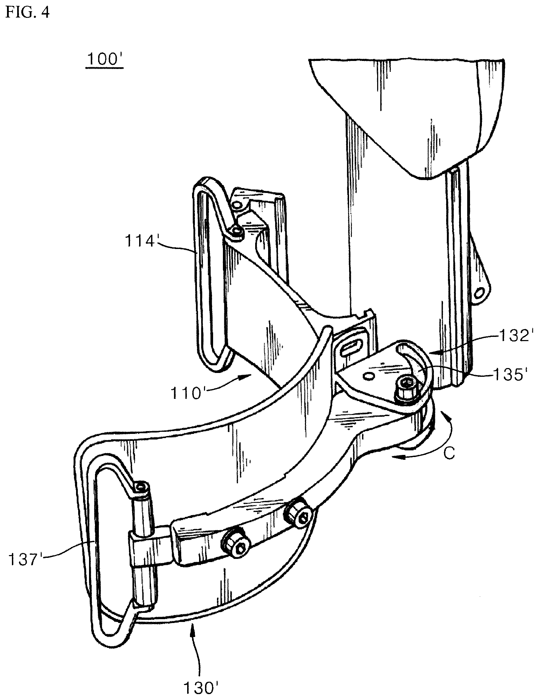

FIG. 4 is a configuration view of a thigh support in the wearable action-assisting device shown in FIG. 3. A thigh support 100' may include a fixing member or first support 110', a bracket member or bracket 132', and a cuff supporting member or second support 130'.The bracket 132' may be coupled to the first support 110'. An guide slot or guide slot 135' may be formed in the bracket 132'. The second support 130' may be coupled to the guide slot 135'. The second support 130' may be moved along the guide slot 135'. Accordingly, the second support 130' may be coupled to the first support 110' so that it is rotatable in a direction of an arrow (indicated by C)to adjust a width of a side of the thigh support 100'.

Connection portions or belt loops 114' and 137' may be formed in the first support and second supports 110' and 130', respectively. Ends of a belt or strap may be connected to the belt loops 114' and 137'.However, the wearable action-assisting device 10' may only include a supporting structure that supports one side of a leg with the second support 130'. Accordingly, the wearable action-assistance device 10' may not stably support a leg, making walking tiring and unstable.

The above references are incorporated by reference herein where appropriate for appropriate teachings of additional or alternative details, features and/or technical background.

### BRIEF DESCRIPTION OF THE DRAWINGS

The embodiments will be described in detail with reference to the following drawings in which like reference numerals refer to like elements wherein:
FIG. 1 is a configuration view of a wearable robot of related art;
FIG. 2 is a configuration view of a thigh support of the wearable robot shown in FIG. 1;
FIG.3 is a configuration view of a wearable action-assistance device of related art;
FIG. 4 is a configuration view of a thigh support in the wearable action-assistance device shown in FIG. 3;
FIG. 5A is a perspective view of a wearable assistive device in accordance with an embodiment;
FIG 5B is a perspective view of a wearable assistive device according to the other embodiment.
FIG. 6 is a schematic side view of the wearable assistive device shown in FIG. 5A;
FIG. 7 is a conceptual view of a technical configuration of a leg belt in the wearable assistive device in accordance with an embodiment;
FIG. 8 is a perspective view schematically showing a leg belt in accordance with an embodiment in the wearable assistive device shown in FIG. 7;
FIG. 9 is a configuration view schematically showing a state in which a buckle is unfastened in the leg belt shown in FIG. 8;
FIG. 10 is a schematic top view of the leg belt shown in FIG. 9;
FIG.11 is an exploded perspective view of a main frame, a first frame and a second frame in the leg belt shown in FIG. 9;
FIG. 12 is a configuration view schematically showing a state in which an inner main frame, an inner first frame, and an inner second frame shown in FIG. 11 are coupled;
FIG. 13 is a use state view of the leg belt shown in FIG. 11;
FIG. 14 is a use state view of the leg belt shown in FIG. 9;
FIG. 15 is a perspective view schematically showing a leg belt in accordance with an embodiment, in the wearable assistive device shown in FIG. 7;
FIG. 16 is a schematic bottom view of the leg belt shown in FIG. 15;
FIG. 17 is a schematic exploded perspective view of the leg belt shown in FIG. 15;
FIG. 18 is a schematic use state view of the leg belt shown in FIG. 15;
FIG. 19 is a schematic cross-sectional view of the leg belt shown in FIG. 8;
FIG. 20 is a schematic exploded perspective view of the leg belt shown in FIG. 19;
FIG. 21 is a schematic first use state view of the leg belt shown in FIG. 19; and
FIG. 22 is a schematic second use state view of the leg belt shown in FIG. 19.

### DETAILED DESCRIPTION

In the present disclosure, 'an assistive force' means an external force provided to assist a strength or a power of a user. 'The assistive force' may be provided by an electric motor, hydraulic pump, or actuator (hydraulic, pneumatic, or electric). The assistive force may be a rotation force provided at joints of a wearable assistive device in order to assist a movement of the user at his joints.

In the present disclosure, 'a bending' means being bent in a first direction and extended to be curved or folded in a second direction different from the first direction. In the present disclosure, 'a hinge coupling' means that a coupling body such as a hinge is rotatably coupled about an object to be coupled.

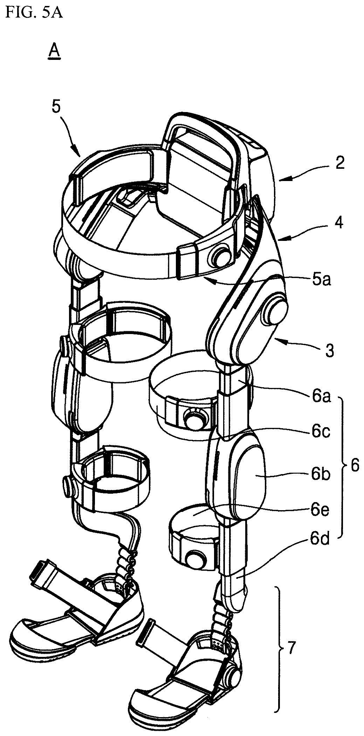

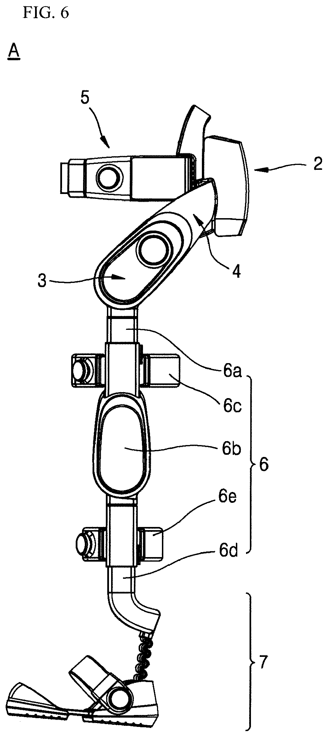

FIG. 5A is a perspective view of awearable assistive device such as a wearable robot, and more specifically an exoskeleton, in accordance with an embodiment. FIG. 6 is a schematic side view of the exoskeleton shown in FIG. 5A.

When the user wears awearable assistive device such as a wearable robot A, and more specifically an exoskeleton, on a lower body and walks, bends, or lifts, the wearable exoskeleton A may assist a lower body power or strength of a user. The exoskeleton A may include a lumbmar/back frame 2, an actuated hip joint 3, a main frame 4, a subframe or waist/pelvic frame 5, a leg assembly or leg 6, and a foot assembly or foot support 7.

When the user wears the wearable exoskeleton A, the lumbar/back frame 2 may be provided at a rear or back, e.g., lumbar, of the user. The lumbar/back frame 2 may house a main controller to adjust a width of the main frame 4 to fit a waist or pelvis size of the user. The lumbar/back frame 2 may have a battery pack or power supply to power or charge the main controller 2. The lumbar/back frame 2 may be coupled to the subframe 5.

The subframe 5 may be worn on a waist of the user to support the waist. The subframe 5 may include a waist belt or belt assembly 5a to secure the subframe 5 to the waist, and the waist belt 5a may be adjustable in length in a via a button dial. Aside of the subframe 5 in contact with the waist may be made of a shock-absorbent material, improving comfort.

The main frame 4 may be coupled to the lumbar/back frame 2. The main frame 4 may have a shape that covers a first side of a pelvis, e.g., ilium, of the user to a second side thereof. The main frame 4 may be formed in a substantially 'U'-shape.

A bent portion of the main frame 4 may be provided at a rear or back of the user. The lumbar/back frame 2 may be provided at the bent portion of the main frame 4. The main frame 4 may have a first end and a second end, which may be extended in a downward direction along the hips or ilium of the user.

The actuated hip joint 3 may be provided between the main frame 4 and the leg assembly. The actuated hip joint 3 may have a subcontroller to adjust a strength or magnitude of an assistive force that assists a power or strength of the user at the hip joint. The subcontroller or the main frame 4 may include a dial or knob so that the user can adjust the magnitude of the assistive force. The subcontroller or main frame 4maybe provided with an indicator to indicate the present magnitude of the assistive force, and may include or communicate with a lamp, light, or light-emitting device such as a light-emitting diode (LED).At the actuated hip joint 3, a driving means such as a motor or actuator (e.g., electric, hydraulic, or pneumatic) or a motor and gear set that provides or generates the assistive force may be provided. The leg assembly 6 may be coupled to a lower side of the actuated hip joint 3.

The leg assembly 6 may be made in pair to be worn on both legs of the user, respectively. Each leg assembly 6 may include an upper leg frame 6a, an actuated joint 6b, a lower leg frame 6d, and leg belts 6c and 6e.

The upper leg frame 6a may be connected to the main frame 4. The upper leg frame 6a may support and secure to a thigh of a user via the leg belt 6c. The lower leg frame 6d may support and secure to a calf of the user via the leg belt 6e. The leg belts 6c and 6e may include a belt or strap having a length adjustable via a button dial or knob.

A lower end of the upper leg frame 6a may be connected to the lower leg frame 6d via the actuated joint 6b, which may include a driving means such as a motor or actuator (e.g., electric, hydraulic, or pneumatic) or motor and gear set that generates an assistive force at the knee joint. For reference, the actuated joint 6b and actuated hip joint 3 may include various driving means or drives capable of generating the assisting force.

The upper leg frame 6a, the actuated joint 6b, and the lower leg frame 6d may extend along a side of the leg of the user so as not to interfere with a natural bending of the user's joints when he walks, bends, or lifts, improving convenience. The actuated joint 6b may move to correspond with a movement of the knee joint of the user. Similarly, the actuated hip joint 3 may move to correspond with a movement of the hip joint of the user. The upper leg frame 6a may extend forward or backward in a sagittal plane of motion from the actuated hip joint 3, and the lower leg frame 6d may extend forward or backward in the sagittal plane from the actuated joint 6b.

The upper leg frame 6a may be extended in a frontal plane of motion inward and outward, e.g., to right and left sides, by a predetermined angle by a hip joint structure (not shown) of the main frame 4. The upper leg frame 6a and the lower leg frame 6d may have a multi-joint structure capable of adjusting an inclination inward or outward to accommodate different sizes of the thigh and calf of the user, respectively. The upper and lower leg frames 6a and 6d may additionally have multi-frame structures to adjust lengths of the upper leg frame 6a and the lower leg frame 6d.

The foot support 7 may secure and support a foot or shoe of the user and may be coupled to a lower end of the lower leg frame 6d.Forconvenience of description, an example where the shoes of the user are fixed to the foot support 7 will be briefly described. A length of a sole of the foot support 7 may be adjustable to accommodate various shoe sizes of the user. The foot support 7 may include a belt or strap to secure the shoes. The foot support 7 maybe formed in a shape corresponding to the shoes of the user. The strap of the foot support 7 may have the same or similar structure to a structure of the leg belts 6c and 6e and the waist belt 5a of the present disclosure.

The foot support 7 may be optional, and the exoskeleton A may be an upper body exoskeleton, lower body exoskeleton, or an exoskeleton configured to be supported on an entire body of a user. For example, the actuated joint 6b, the lower leg frame 6d, the leg belt 6e, and the foot support 7 may be omitted. Thus, an exoskeleton A may provide assistance to the user at the actuated hip joint 3, and may include a main frame 4, a lumbar/back frame 2, and a leg assembly 6 that includes only an upper leg frame 6a that secures to a thigh of the user via a leg belt 6c.

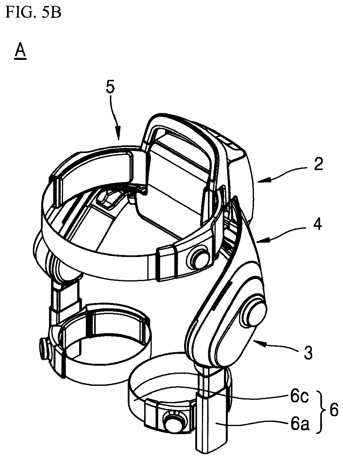

Furthermore,, embodiments disclosed herein may not be limited to a complete lower body exoskeleton based on an intended use of the exoskeleton. For example, Referring to FIG. 5B the actuated joint 6b, the lower leg frame 6d, the leg belt 6e, and the foot support 7 may be omitted. Thus, an exoskeleton A may provide assistance to the user at the actuated hip joint 3, and may include a main frame 4, a lumbar/back frame 2, and a leg assembly 6 that includes only an upper leg frame 6a that secures to a thigh of the user via a leg belt 6c. Such an upper leg exoskeleton A may have a hip structure substantially the same as or similar variations to the hip structure of the main frame 4 described in detail herein.

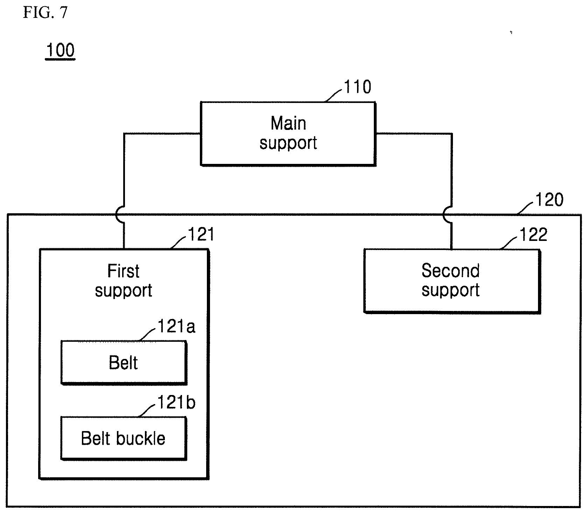

Hereinafter, a leg belt in accordance with an embodiment will be described in detail. FIG. 7 may is a conceptual view of a technical configuration of a leg belt in accordance with an embodiment.

A belt assembly 100 may be implemented as leg belts 6c or 6e in Figures 5-6. The leg belt 100 may also have a similar structure to the waist belt 5a, and so may also be implemented as a belt of the subframe 5. For convenience of description, an example where the belt assembly 100 secures a thigh or calf of the user will be described herein, and the belt assembly 100 will be referred to as a leg belt. The leg belt 100may include a main support 110 and a sub-support 120. The sub-support 120 may be formed in plurality. The sub-support 120 may include at least one first support or arm 121 and at least one second support or arm 122. A first side of the main support 110 may be rotatably coupled to the first support 121. A second side of the main support 110 may be rotatable coupled to the second support 122. As an alternative, the sub-support 120 and/or the second support 122 of the sub-support 120 may be omitted.

The first support 121 may include a belt or strap 121a and a belt fastener or belt buckle 121b. The belt 121a may wrap around a leg of a user. The belt 121a may be stored in the first support 121 so as to be withdrawable and/or retractable. The belt 121a may be connected to the belt buckle121b. The belt buckle 121b may have a first end and a second end. The second end of the belt buckle 121b may be detachably coupled to the second support 122, while the first end of the belt buckle 121b may be connected to the belt 121a.

The first support 121 and the second support 122 may close to form an open area where the legs of the user may be positioned when the user secures the leg belt 100. When the belt 121a is not being used to secure the leg of the user to the leg belt 100, the belt 121a may be stored in the first support 121. Accordingly, contamination of and damage to the belt 121a may be prevented. The belt 121a may be withdrawn from the first support so that the belt buckle121b may be detachably coupled to the second support 122.

The leg of the user may primarily be supported by the main support 110. The leg of the user may further be supported at first and second sides by the first support 121 and the second support 122. The first support 121 and the second support 122 may include a curved surface that covers the leg or waist of the user. Accordingly, the belt assembly 100 may have a structure to effectively support the leg or waist of the user. The first and second supports 121 and 122 may be coupled via hinge structures to be described later to the main support 110, which may further allow effective support and adjustment regardless of how wide the user's leg may be.

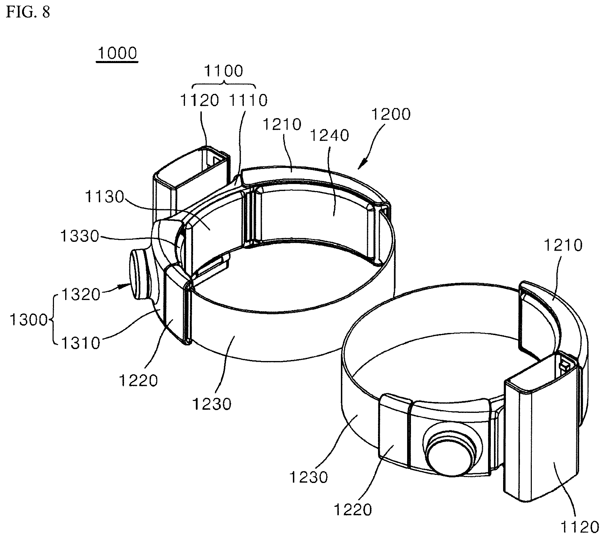

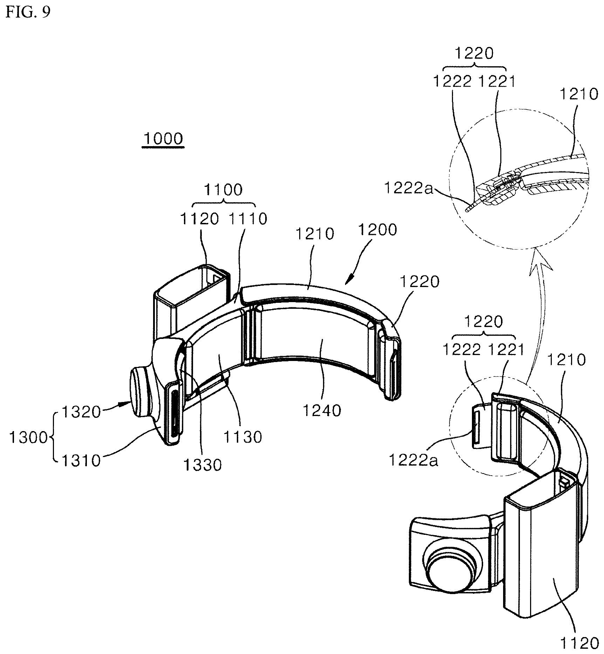

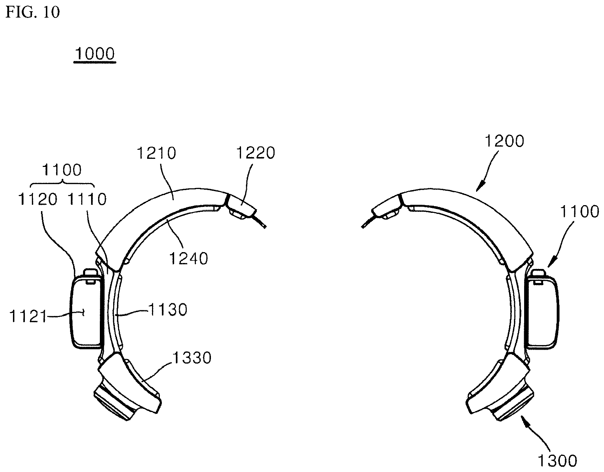

FIG. 8 is a perspective view schematically showing a leg belt in accordance with an embodiment represented in FIG. 7. FIG. 9 is a configuration view schematically showing a state in which a belt buckle may be unfastened shown in FIG. 8. FIG. 10 may be a schematic top view of the leg belt shown in FIG. 9.

When the exoskeleton A has two leg assemblies each having multiple leg belts 1000, a leg belt 1000 may be realized as a pair of thigh supports that are mounted on upper leg frames (shown as 6a in FIG. 5A), respectively. Further, the leg belt 1000 may be realized as a pair of calf supports that are mounted on lower leg frames (shown as 6d in FIG. 5A), respectively. Further, the leg belts 1000 of each leg assembly may have symmetric shapes so that the user can perform similar operations with both legs.

The leg belt 1000 may include a main support 1100, at least one first support or arm 1200, and at least one second support or arm 1300. The first support 1200 may be coupled to a first side of the main support 1100. The second support 1300 may be coupled to a second side of the main support 1100. The main support 1100 may be provided at a center between the first and second supports 1100 and 1200. As an alternative, the first support 1200 and/or the second support 1300 may be omitted.

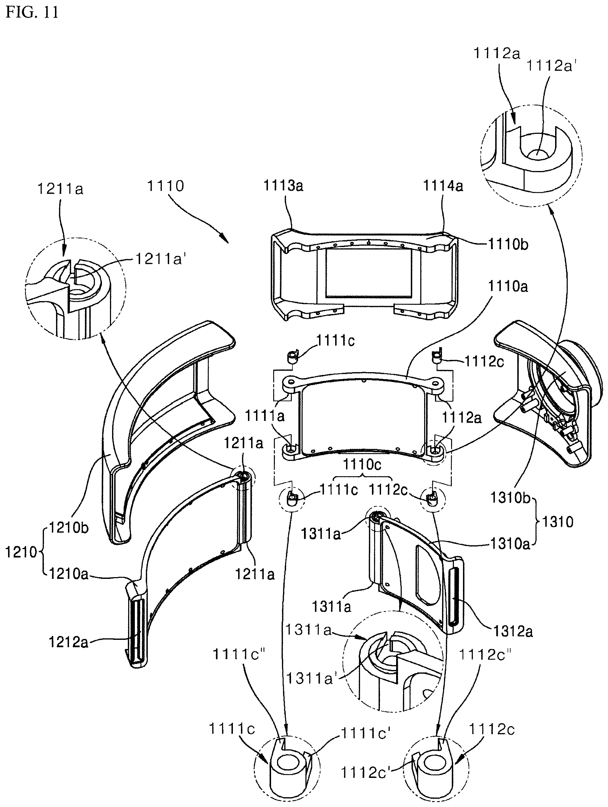

The main support 1100 may include a main frame or main support frame 1110 and a leg coupling frame or leg connector 1120 that connects the leg belt 1000 to the leg assembly 6.The main frame 1110 may contact and support a leg of a user, and may be formed in a rectangular frame shape having a curved surface. A detailed shape of the main frame 1110 will be described later in detail with reference to FIG. 11.

The leg of the user may be supported in an inner side of the main frame 1110, and the leg connector 1120 may be coupled to an outer side of the main frame 1110.The leg connector 1120 may couple the main frame 1110 to the upper or lower leg frames6a or 6d and may be formed as a rectangular frame. A receiving hole opening 1121 may be formed in the leg connector 1120.The upper or lower leg frame 6a or 6d may be inserted into the receiving hole 1121 so that the main frame 1110 may be mounted on the wearable exoskeleton A.

The first support 1200 may include a first subframe or first frame 1210, a belt fastener or buckle 1220, and a belt or strap 1230. The first frame 1210 may be coupled to the main frame 1110 of the main support 1100 by a hinge joint or hinge. A detailed shape of the first frame 1210 will be described in more detail with reference to FIG. 11.

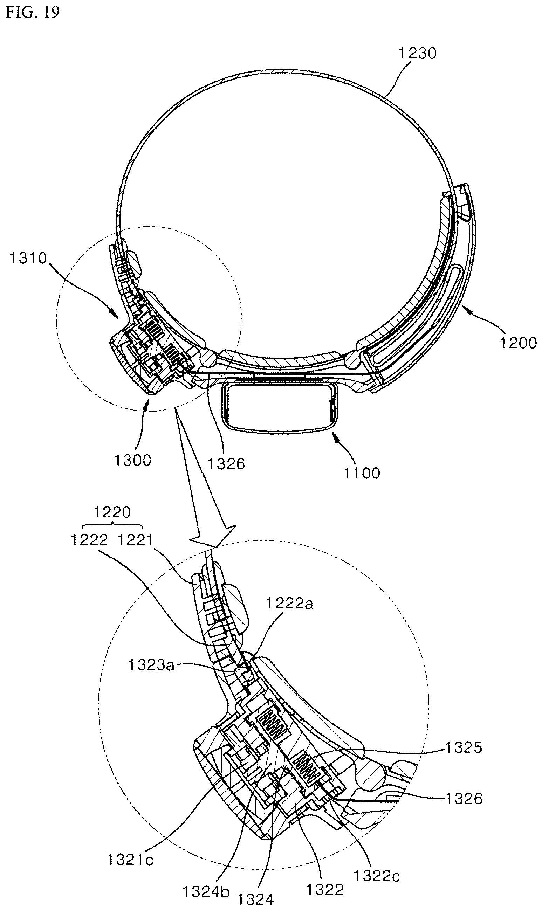

The belt buckle 1220 may include a buckle body or base 1221 and a buckle plate or tongue 1222. In the buckle base 1221, the belt 1230 may be coupled to a first side of the buckle base 1221 and the buckle plate 1222 may be coupled to a second side of the buckle base 1221. The buckle plate 1222 may be detachably coupled to the second support 1300. The buckle plate 1222 may be formed with a slit 1222a. The slit 1222a may hook onto a latch stick 1323a (FIG. 19) provided on the second support 1300 in order to fasten the buckle 1220. The latch stick 1323a may be inserted in the slit 1222a. The slit 1222a may be a hole or an opening having a length in the longitudinal direction of the buckle plate 1222, or other appropriate shape based on the structure for latching or securing the buckle plate 1222.

A first side of the belt 1230 may be connected to the buckle base 1221 and a second side of the belt 1230 may be stored in the first frame 1210 so as to be retractable and withdrawable. Accordingly, the buckle base 1221 may rest on the first frame 1210 when the belt 1230 is stored. Further, the belt 1230 may be elastic or made of a material having an elasticity.

The second support 1300 may include a second frame 1310 and a wire winding structure or a wire winder 1320. A leg of the user may be provided at an inner side of the second frame 1310 when the leg belt 1000 is secured to the leg of the user, and a wire winder 1320 may be coupled to an outer side of the second frame 1310. In order to effectively support the leg of the user, the inner side of the second frame 1310 may have a curved surface. The second frame 1310 may be coupled to the main frame 1110 of the main support 1100 by a hinge joint. A detailed shape of the second frame 1310 for this purpose will be described in more detail through FIG. 11 to be described later.

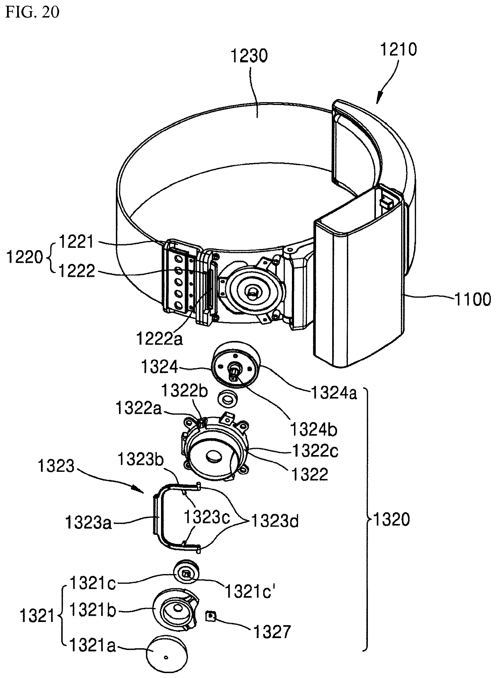

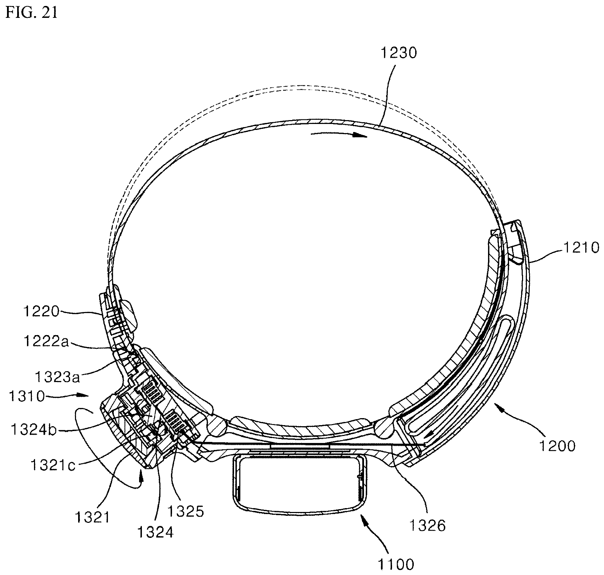

The wire winder 1320 may operate a fastening and unfastening of the belt buckle 1220 about the second frame 1310. Further, the wire winder 1320 may manipulate a winding of a wire 1326 (FIG. 19) connected to the belt 1230. The length of thebelt1230 may be adjusted by an operation of the wire winder 1320. As the wire 1326 is wound and unwound by the wire winder 1320, the belt 1230 may be moved in and out of the first support 1200. A detailed configuration of the wire winder 1320 and a belt length adjustment there through will be described later through FIGS. 20 and 21.

When the first frame 1210 and the second frame 1310 are coupled to the main frame 1110, the leg belt 1000 may be formed in a substantially "C"-shape. For this purpose, an inner surface of the first frame 1210 and the second frame 1310 may have curved surfaces that are symmetrical to each other.

Cushions or impact portions 1130, 1240, and 1330 may be coupled to the main support 1100, the first support 1200, and the second support 1300, respectively. The cushions 1130, 1240, and 1330 may provide a soft texture and a resilience to the user, and may be variously realized by a soft foam or a cushion sheet, for example. The cushions 1130, 1240, and 1330 may be made of a shock-absorbent material or may be made of a soft material to provide comfort to the user. The cushions 1130, 1240, and 1330 may fasten to the main, first, and second supports 1100, 1200, and 1300viaVelcro to facilitate cleaning and detachment.

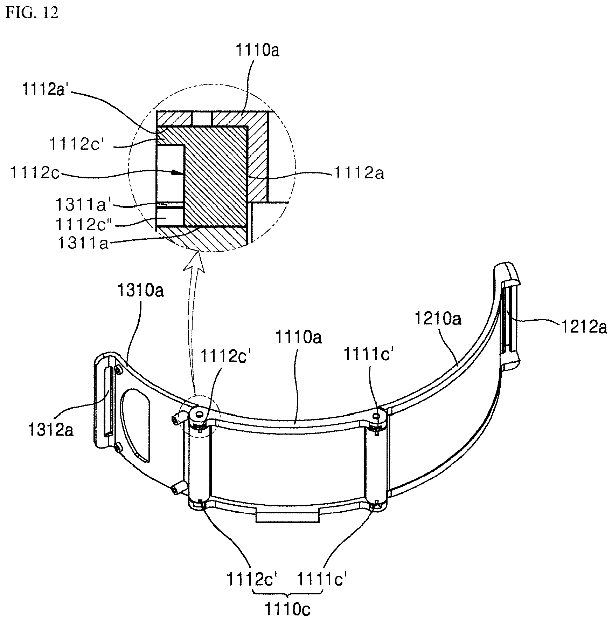

FIG. 11 is an exploded perspective view of the main frame 1110, the first frame 1210, and the second frame 1310 in the leg belt1000 shown in FIG. 9. FIG. 12 is a configuration view schematically showing a state in which an inner main frame, an inner first frame, and an inner second frame shown in FIG. 11 are coupled.

The main frame 1110 may include an inner main frame 1110a, an outer main frame 1110b, and an elastic member 1110c. The leg of the user may contact an inner side of the inner main frame 1110a, and the outer main frame 1110b may be coupled to an outer side of the inner main frame 1110a. In consideration of a shape of the leg, the inner main frame 1110a may have a rectangular frame shape having a curved surface.

A first hinge hole or bracket 1111a may be formed at a first end of the inner main frame 1110a. A second hinge hole or bracket 1112a may be formed at a second end of the inner main frame 1110a. The first frame 1210 may be coupled to the first hinge bracket 1111a to forma hinge joint. The second frame 1310 may be coupled to the second hinge bracket 1112a to forma hinge joint. The first hinge bracket 1111a may be formed on upper and lower ends or surfaces of the inner main frame 1110a, respectively. The second hinge bracket 1112a may be formed on upper and lower ends or surfaces of a second end of the inner main frame 1110a, respectively.

In one embodiment of a hinge coupling structure, the first hingebracket 1111a and the second hingebracket 1112a may be formed with a groove. In the first frame 1210 and the second frame 1310, a projection or shaft corresponding to the groove may be formed, respectively. The first frame 1210 and the second frame 1310 may be coupled to the main frame 1110 by a hinge joint, respectively, by inserting the projection into the groove.

As another embodiment of the hinge coupling structure, a through hole may be formed in the first and second hingebrackets1111a and 1112a. A hole corresponding to a through hole may be formed in the first and second frames 1210 and 1310. The first frame 1210 and the second frame 1310 can be coupled to the main frame 1110 by inserting a fixing pin or hinge pin into the through hole and the hole.

The elastic member 1110c may elastically support the first frame 1210 and the second frame 1310 to the main frame 1110, respectively. The elastic member 1110c may include a first elastic member 1111c to support the first frame 1210 and a second elastic member 1112c to support the second frame 1310.

The first and second elastic members 1111c and 1112c may have a cylindrical shape with two protrusions. A first or bottom pin 1111c' may be formed at a first or bottom end of the first elastic member 1111c, and a second or top pin 1111c" may be formed at a second or bottom end of the first elastic member 1111c. Similarly, a first or bottom pin 1112c' may be formed at a first or bottom end of the second elastic member 1112c, and a second or top pin 1112c" may be formed at a second or bottom end of the second elastic member 1112c.

A first insertion groove 1111a' may be formed in the first hinge bracket 1111a. The first elastic member 1111 c may be housed in the first insertion groove 1111a'. When the first elastic member 1111c is inserted into the first insertion groove 1111a', the first pin 1111c' of the first elastic member 111c may be contact aside wall of the first insertion groove 1111a'.

A second insertion groove 1112a' may be formed in the second hinge bracket 1112a. The second elastic member 1112c may be housed in the second insertion groove 1112a'. When the second elastic member 1112c is inserted into the second insertion groove 1112a', the first pin 1112c' of the second elastic member 1112c may contact on a side wall of the second insertion groove 1112a'.

The outer main frame 1110b may be shaped to correspond to that of the inner main frame 1110a so as to cover an outer side of the inner main frame 1110a. The outer main frame 1110b may be coupled to the outer side of the inner main frame 1110a.

The first frame 1210 may include an inner first frame 1210a and an outer first frame 1210b.Theleg of the user may contact an inner side of the inner first frame 1210a, and the outer first frame 1210b may be coupled to an outer side of the inner first frame 1210a. In consideration of a shape of the leg, the inner first frame 1210a may have a rectangular frame shape having a curved surface.

A first main hinge shaft or knuckle 1211a corresponding to the first hinge bracket 1111a may be formed at a first end of the inner first frame 1210a.

The first main hinge knuckle 1211a may be formed with a first coupling groove 1211a' to which the first pin 1111c' of the first elastic member 1111c may be coupled. The first elastic member 1111c may be inserted into the first insertion groove 1111a' of the first hinge bracket 1111a, and the first pin 1111c' may contact a side wall of the first insertion groove 1111a'. The second pin 1111c" of the first elastic member 1111c may be supported on the first coupling groove 1211a'.

Accordingly, the first frame 1210 may be in an elastically supported state on the main frame 1110 by the first elastic member 1111c, and the first main hinge knuckle 1211a, the first elastic member 1111c, and the first hinge bracket 1111a may together form a hinge joint. When the first frame 1210 is coupled to the main frame 1110 by the hinge joint and rotated, the first pin 1111c' of the first elastic member 1111c may be supported on the side wall of the first insertion groove 1111a', and the second pin 1111c" may be supported on the first coupling groove 1211a'. The first elastic member 1111c may be compressed or expanded.

Further, a belt hole or slot 1212a in which the belt 1230 may be retracted and withdrawn may be formed in the inner first frame 1210a. The belt hole 1212a may also be referred to as a withdrawal hole or slot. The outer first frame 1210b may have a shape corresponding to that of the inner first frame 1210a so that the outer first frame 1210b may cover and couple to an outer side of the inner first frame 1210a.

Similar to a structure of the first frame 1210, the second frame 1310 may include an inner second frame 1310a and an outer second frame 1310b. The leg of the user may contact an inner side of the inner second frame 1310a, and the outer second frame 1310b may be coupled to an outer side of the inner second frame 1310a. In consideration of a shape of the leg, the inner second frame 1310a may have a rectangular frame shape having a curved surface.

A second main hinge shaft or knuckle 1311a corresponding to the second hinge bracket 1112a may be formed at a first end of the inner second frame 1310a. The second main hinge knuckle 1311a may be formed with a second coupling groove 1311a' to which the second pin 1112c" of the second elastic member 1112c may be coupled. The second elastic member 1112c may be inserted into the second insertion groove 1112a' of the second hinge bracket 1112a, and the first pin 1112c' may be supported on the second insertion groove 1112a'. The second pin 1112c" of the second elastic member 1112c may be supported on the second coupling groove 1311a'.

Accordingly, the second frame 1310 may be in an elastically supported state on the main frame 1110 by the second elastic member 1112c. The second hinge bracket 1112a, the second main hinge knuckle 1311a, and the second elastic member 1112c may together form a hinge joint. When the second frame 1310 is coupled to the main frame 1110 by a hinge joint and rotated, the first pin 1112c' of the second elastic member 1112c may be supported on a side wall of the second insertion groove 1112a', and the second pin 1112c" may be supported on the second coupling groove 1311a'. The second elastic member 1112c may be compressed or expanded.

Further, a buckle hole or slot 1312a may be formed in the inner second frame 1310a. The buckle hole 1312a may also be referred to as an insertion hole or slot. The buckle plate 1222 may be inserted into the insertion hole 1312a.The outer second frame 1310b may be formed in a shape corresponding to that of the inner second frame 1310a so that the outer second frame 1310b covers and couples to an outside of the inner second frame 1310a. Further, a wire winder 1320 may be mounted on the outer second frame 1310b.

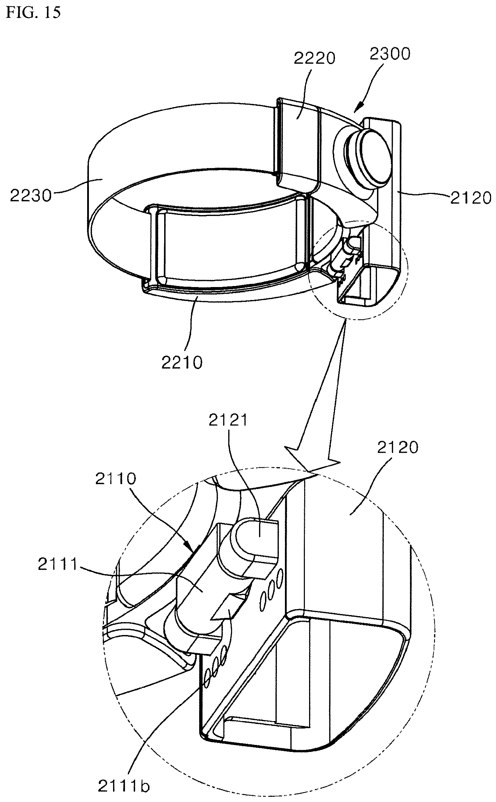

Accordingly, the second frame 1310 may be coupled to the second side of the main frame 1110 by a hinge joint while being elastically supported by the second elastic member 1112c. As another embodiment of an elastic supporting structure, an elastic member may be formed in a plate shape. A first end of the elastic member may be coupled to the main frame 1110, and a second end of the elastic member may be coupled to a subframe or first and second frames 1200, 1300. Accordingly, the subframe can be elastically supported on the main frame by the elastic member. A further alternate embodiment of the hinge joints will be described with reference to FIG. 15 later.

A first stopper 1113a may be formed on the first side of the outer main frame 1110b to limit a movement of the first frame 1210. A second stopper 1114a may be formed on the second side of the outer main frame 1110b to limit a movement of the second frame 1310. The first stopper 1113a may be provided in a rotation area or range of the first frame 1210. The second stopper 1114a may be provided in a rotation area or range of the second frame 1310.

A rotation area means an area or range in which the first frame 1210 and the second frame 1310 move, rotate, or pivot while they are coupled to the outer main frame 1110b, respectively. The first stopper 1113a may be projected outward at an end of the first side of the outer main frame 1110b. The first stopper 1113a may oppose the first hinge bracket 1111a on the outer main frame 1110b; i.e., the first stopper 1113a may project from an outer side of the outer main frame 1110b, while the first hinge bracket 1111a of the inner main frame 1110a may be positioned at an inner side of the outer main frame 1110b.

An upper end of the first stopper 1113a may be higher than where an upper end of the outer first frame 1210b is coupled to the outer main frame 1110b. The first stopper 1113a may also be positioned outward from a pivot point of the first hinge joint and where the outer first frame 1210b is coupled to the outer main frame 1110b. Accordingly, after the first frame 1210 is rotated at a predetermined angle about the main frame 1110, the first frame 1210 may be in contact with the first stopper 1113a and further rotation may be prevented.

Further, at a second end of the second side of the outer main frame 1110b, the second stopper 1114a may be formed to be projected outward. The second stopper 1114a may oppose the second hinge bracket 1112a; i.e., the second stopper 1114a may project from an outer side of the outer main frame 1110b, while the second hinge bracket 1112a of the inner main frame 1110a may be positioned at an inner side of the outer main frame 1110b.

An upper end of the second stopper 1114a may be higher than where an upper end of the outer second frame 1310b is coupled to the outer main frame 1110b. The second stopper 1114a may also be positioned outward from a pivot point of the second hinge joint and where the outer first frame 1210b is coupled to the outer main frame 1110b. Accordingly, after the second frame 1310 is rotated at a predetermined angle about the main frame 1110, the second frame 1310 may contact the second stopper 1114a and further rotation may be prevented.

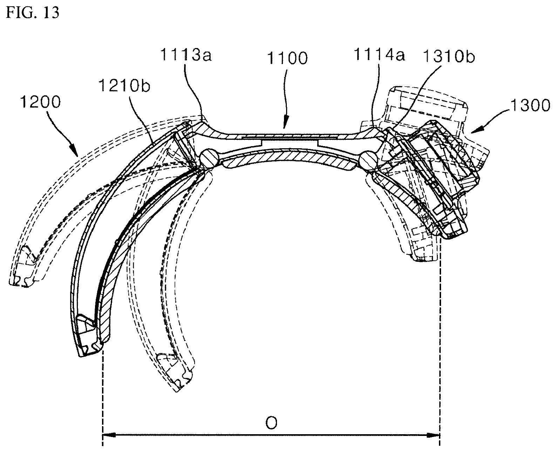

FIG. 13 may be a use state view of the leg belt shown in FIG. 11. As previously described, on both sides of the main support 1100, the first support 1200 and the second support 1300 may be coupled by a hinge joint so as to be rotatable, respectively. Further, the first support 1200 and the second support 1300 may be elastically supported by the first elastic member 1111c and the second elastic member 1112c, respectively.

The first support 1200 and the second support 1300 may be rotated to an inside and an outside of an open area O of the leg belt 1000, and may be returned to the open area O of the leg belt 1000. When the first support 1200 is rotated to an outside of the open area O by a predetermined angle or more, an outer first frame 1210b may contact the first stopper 1113a, and further rotation may be prevented. Similarly, when the second support 1300 is rotated to the outside of the open area O by a predetermined angle or more, an outer second frame 1310b may contact the second stopper 1114a, and a further rotation may be prevented. The predetermined angles of the first support 1200 and the second support 1300 may be set according to position a of the first and second stoppers 1113a and 1114a, respectively.

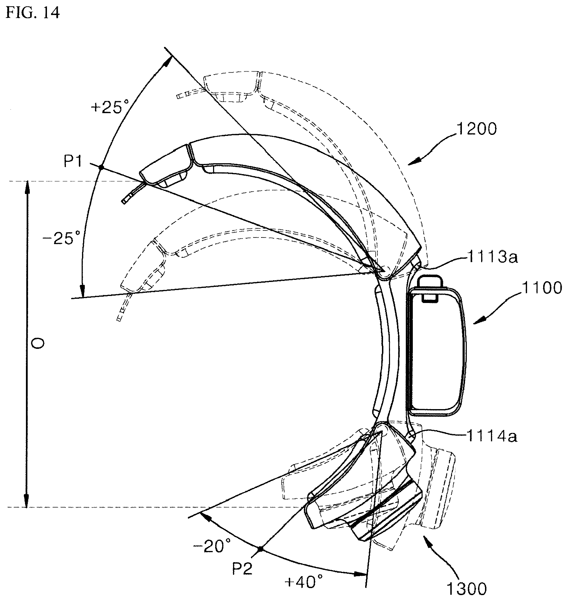

FIG. 14 is a schematic use state view of the leg belt shown in FIG. 9. A reference or default position of the first support 1200 coupled to the main support 1100 may be set as P1 by the first elastic member 1111 c (FIG. 11). A reference or default position of the second support 1300 coupled to the main support 1100 may be set as P2 by the second elastic member 1112c (FIG. 11). As shown in FIG. 14, the predetermined angle; i.e., rotation range, of the first support 1200 may be different from the predetermined angle; i.e., rotation range, of the second support 1300. As an alternative embodiment not shown, the rotation ranges of the first and second supports 1200 and 1300 may be the same so that a symmetrical rotation is possible. The rotation ranges may be set according to how the leg belt 1000 is to be implemented; for example, the rotation ranges may not be the same when the leg belt 1000 secures calves, which are asymmetrical with respect to left and right sides. However, the rotation ranges of the leg belt 1000 may be the same or substantially similar when the leg belt 1000 is implemented as a waist belt.

Referring to FIG. 14, the first support 1200 may, for example, be rotated inward to -25° from a reference position P1of the first support 1200 to be inside of an open area O. The first support 1200 may be rotated outward to+25° from the reference position P1to be outside of the open area O. A range in which the first support 1200 may be rotated outward may be set by the first stopper 1113a. Accordingly, the first support 1200 may be rotated from the reference position P1 to the range of -25° to +25°.

The first support 1200 may be manually rotated from the reference position P1 to -25° or +25° , which may compress the first elastic member 1111c (Figures 11-12). When the first support 1200 is released (or when the buckle 1220 is unfastened), the first support 1200 may automatically rotate back to the reference position P1 by a restoring force of the first elastic member 1111c.

The second support 1300 may be rotated inward to -20° from the reference position P2 of the second support 1300 to be inside of the open area O. The second support 1300 may be rotated outward to +40° from the reference position P2 of the second support 1300 to be outside of the open area O. A range in which the second support 1300 may be rotated outward may be set by the second stopper 1114a. Accordingly, the second support 1300 may be rotated from the reference position P2 to the range of -20° to +40° .

The second support 1300 may be rotated manually from the reference position P2 to -20° or +40° , which may compress the second elastic member 1112c (Figures 11-12). When the second support 1300 is released (or when the buckle 1220 is unfastened), the second support 1300 may automatically rotate back to the reference position P1 by a restoring force of the second elastic member 1112c.

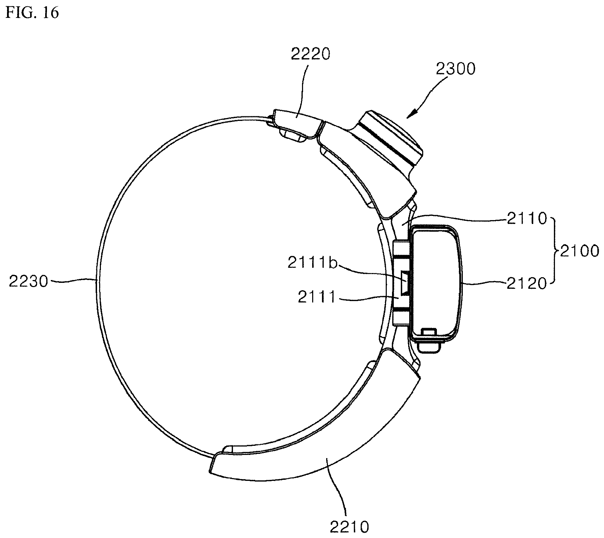

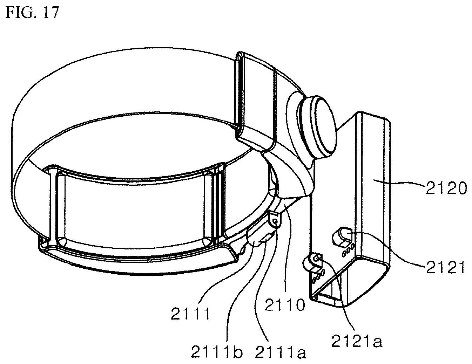

FIG. 15 is a schematic perspective view of the leg belt in accordance with an embodiment in the exoskeleton A shown in FIG. 7. FIG. 16 may be a schematic bottom view of the leg belt shown in FIG. 15. FIG. 17 may be a schematic exploded perspective view of the leg belt shown in FIG. 15.

Compared with the leg belt 1000 shown in FIG. 8, a leg belt 2000 may be different only in a coupling structure of a main frame and a leg coupling frame or leg connector. Referring to Figures 15-18, like the leg belt 1000, the leg belt 2000 may include a main support 2100, at least one first support or arm 2200 and at least one second support or arm 2300. As an alternative, the first support 2200 and/or the seconds support 2300 may be omitted. The main support 2100 may include a main frame or main support frame 2110 and a leg coupling frame or leg connector 2120. The first support 2200 may include a first frame 2210, a belt buckle or fastener 2220, and a belt or strap 2230. Further, the main frame 2110 may be coupled to the leg connector 2120 by a hinge joint that is rotatable by a predetermined angle. The hinge joint will be described in more detail with reference to FIG. 17.

The main frame 2110 may be formed with a hinge knuckle 2111 to which the leg connector 2120 may be coupled. In the leg connector 2120, a hinge bracket 2121 corresponding to the hinge knuckle 2111 may be formed. The hinge knuckle 2111 may be coupled to the hinge bracket 2121 via a hinge pin or hinge shaft to form a hinge joint. The hinge pin or hinge shaft may be a projection 2121a formed on inner sides of two hinge brackets 2121 that fit into holes or grooves 2111a of the hinge knuckle 2111. Alternatively, though not shown, the hinge pins or hinge shafts may be a projection formed on outer sides of the hinge knuckle 2111 that fit into holes or grooves of the hinge brackets 2121. As another alternative embodiment not shown, the hinge brackets 2121 may also have holes corresponding to holes 2111a of the hinge knuckle 2111, and a separate hinge pin or hinge shaft may be screwed or bolted into the holes of the hinge brackets 2121 and the hinge knuckle 2111.The first example where projection a 2121a formed on the hinge brackets 2121 serve as hinge pins will be described herein for convenience.

FIG. 17 shows an example of a hinge joint. The hinge knuckle 2111 may be formed at a first end of the main frame 2110. The hinge knuckle 2111 may be projected from the main frame 2110 at a rear or bottom surface. A groove or hole 2111a may be formed at first and second ends of the hinge knuckle 2111. First and second hinge brackets 2121 may be formed on an inner side of the leg connector 2120 so as to face the hinge knuckle 2111. The first hinge bracket 2121 may be positioned to correspond to a first end of the hinge knuckle 2111, and the second hinge bracket 2121 may be positioned to correspond to a second end of the hinge knuckle 2111.

A projection or pin 2121a may be formed on inner sides of each bracket 2121 to correspond to the grooves 2111a of the hinge knuckle 2111.The pins 2121a of the hinge brackets 2121 may be inserted into the grooves 2111a of the hinge knuckle 2111. Accordingly, the main frame 2110 may be coupled to the leg connector 2120 by a hinge joint formed from the hinge brackets 2121 and the hinge knuckle 2111 so as to be rotatable.

The hinge knuckle 2111 may be formed on a lower portion of the main frame 2110, and the hinge brackets 2121 may be formed on a lower portion of the leg connector 2120. Alternatively, the hinge knuckle 2111 may be formed on an upper portion of the main frame 2110, and the hinge brackets 2121 may be formed on an upper portion of the leg connector 2120. Accordingly, a rotation range of the main frame 2110 about the leg connector 2120 may be maximized such that interference between the main frame 2110 and the leg connector 2120 is minimized.

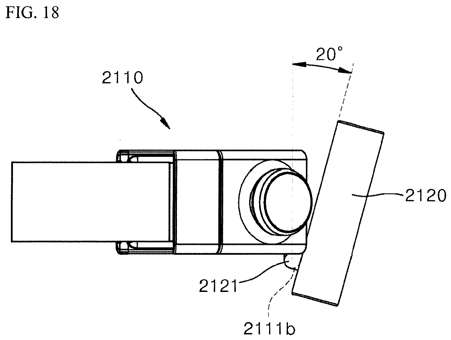

Referring to FIG. 18, a stopper 2111b may be formed in the hinge knuckle 2111 to limit a rotation angle of the main frame 2110 about the leg connector 2120. The stopper 2111b may be projected from the hinge knuckle 2111 so as to contact the leg connector 2120 when the main frame 2110 is rotated a predetermined amount. The stopper 2111b may be provided in a rotation area of the main frame 2110 about the leg connector 2120. Therefore, when the main frame 2110 is rotated by a predetermined angle, the leg connector 2120 may contact the stopper 2111b. Accordingly, a rotation of the main frame 2110 about the leg connector 2120 may be limited. A rotation range of the main frame 2110 about the leg connector 2120 can be set in accordance with a position and shape of the stopper 2111b.

In addition, an elastic member may be mounted on the hinge knuckle 2111 and the hinge bracket 2121. The main frame 2110 may thus be restored to a default or reference position after a manual rotation about the leg connector 2120.

FIG. 18 is a schematic use state view of the leg belt shown in FIG. 15. The main frame 2110 may be coupled to the leg connector 2120. The hinge bracket 2121 may be coupled to the hinge knuckle 2111 to form a hinge joint. The projection 2121a of the hinge bracket 2121 may be inserted into the groove 2111a formed at both ends of the hinge knuckle 2111. Accordingly, the main frame 2110 may be rotated about the leg connector 2120.

After the main frame 2110 is rotated by a predetermined angle about the leg connector 2120, the leg connector 2120 may contact the stopper 2111b. Accordingly, a rotation angle of the main frame 2110 about the leg connector 2120 may be limited, and the main frame 2110 may no longer be rotated. An excessive rotation of the main frame 2110 may thus be prevented, and a user can safely and stably wear the wearable exoskeleton A.FIG. 18 shows an example in which a rotation angle of the main frame 2110 may be limited to 20° by the stopper 2111b.

FIG. 19 is a schematic cross-sectional view of the leg belt shown in FIG. 8. FIG. 20 may be a schematic exploded perspective view of the leg belt shown in FIG. 19. A belt 1230 may be secured in a first frame 1210 of a first support 1200 and may be retractable and withdrawable. A first end of the belt 1230 may be coupled to a belt buckle or fastener 1220 and a second end of the belt 1230 may be coupled to a wire 1326. The belt buckle 1220 may include a buckle body or buckle base 1221 and a buckle plate or tongue 1222. The belt 1230 may be coupled a first end of the buckle base 1221 and the buckle plate 1222 may be coupled to a second end of the buckle base 1221. The buckle plate 1222 may be formed with a slit or latch ring 1222a.

A second support 1300 may include a second frame 1310 and a wire winder 1320. The wire winder 1320 may be provided in the second frame 1310. The wire winder 1320 may include a button dial 1321, a wire winding body or a case 1322, a latch holder or hook 1323, a wire winding dispenser 1324 which may be one of a bobbin, reel, and spindle, a plate spring 1325, the wire 1326, and a latch fixer 1327. For convenience, the wire winding dispenser 1324 will be referred to as a wire reel 1324 and the case 1322 will be referred to as a reel case 1322.

The button dial 1321 may be rotatably coupled to the reel case 1322 to wind the wire 1326. The button dial 1321 may include a button 1321a, a dial body 1321b, and a wire operator or inner disc 1321c.

The button 1321a and the inner disc 1321c may be coupled to the dial body 1321b. A projection hole 1321c' may be formed in the inner disc 1321c. The latch hook 1323, which may fasten to the buckle plate 1222, may be coupled to an outer circumferential surface of the reel case 1322. As the reel case 1322 is linearly moved, inward and outward by the button dial 1321, the latch hook 1323 may also be moved.

The latch hook 1323 may include a latch stick 1323a, a latch body 1323b, an inner latch projection 1323c, and an outer latch projection 1323d. The latch stick 1323a may be inserted into the slit 1222a of the buckle plate 1222 to limit a movement of the buckle plate 1222 and secure the buckle 1220. The latch stick 1323a may be projected in an outward direction on a vertical section of the latch body 1323b. The inner latch projection 1323c may be formed on the latch body 1323b so as to be projected to an inside of a C-shape of the latch body 1323b. The outer latch projection 1323d may be formed at ends of the latch body 1323b so as to be projected outward from the latch body 1323b.

The latch hook 1323, the button dial 1321, and the wire reel 1324 may be coupled to the reel case 1322. A latch guide or groove 1322a, a latch support or flange 1322b, and a wire hole 1322c may be formed on an outer circumferential surface of the reel case 1322. The inner latch projection 1323c of the latch hook 1323 may be seated on the latch groove 1322a. A movement of the inner latch projection 1323c may be limited by the latch support 1322b. The outer latch projection 1323d may be coupled to the reel case 1322 by the latch fixer 1327.

The wire reel 1324 may be provided in the reel case 1322. A hole 1324a into which a wire may be inserted may be formed on an outer circumferential surface of the wire reel 1324. A projection 1324b may be formed on a center of an outer side of the wire reel 1324. The projection 1324b may selectively connect the wire reel 1324 and the button dial 1321 in accordance with a liner movement of the button dial 1321. The wire 1326 may penetrate the wire hole 1322c to an inside or interior of the reel case 1322. The wire 1326 may be connected to the wire reel 1324 through the wire hole 1322c.

The projection 1324b may be selectively coupled to the projection hole 1321c' of the inner disc 1321c. When the projection hole 1321c' is coupled to the projection 1324b, the wire reel 1324 may be rotated by a rotation of the button dial 1321. When the projection hole 1321c' is taken off the projection 1324b, the wire reel 1324 may not be limited by a movement of the button dial 1321, and may rotate independently from the button dial 1321.

A plate spring or elastic member 1325 may be inserted into and coupled to the wire reel 1324. The wire 1326 may be connected to the plate spring 1325. With a movement of the wire 1326, the plate spring 1325 may be compressed or restored. When the plate spring 1325 is restored after compression, the plate spring 1325 may rotate the wire reel 1324.

FIG. 21 is a schematic use state view of the leg belt shown in FIG. 19. The belt 1230 to be withdrawn from the first frame 1210 and the belt buckle 1220 may be detachably coupled to the second frame 1310. The latch stick 1323a of the latch hook 1323 may be inserted into the slit 1222a of the buckle plate 1222.

The wire 1326 may be withdrawn from the wire reel 1324, and the plate spring 1325 may become compressed. The button dial 1321 may be coupled to the projection 1324b of the wire reel 1324.Once the buckle 1220 is fastened via the slit 1222a and the latch hook 1323, a user may rotate the button dial 1321 to adjust the length of the belt 1230. The wire reel 1324 may be interlocked with a rotation of the button dial 1321, and the wire 1326 may be wound on the wire reel 1324 to tighten the belt 1230.

As the wire 1326 is moved in a first direction (clockwise in FIG. 21), the belt 1230 connected to the wire 1326 may be moved back into the first frame 1210. Accordingly, the length of the externally exposed belt 1230 may be reduced, and a user can adjust a length of the belt to fit his or her legs.

Further, a shape and size of muscles in the leg when sitting may be different from those when standing due to different muscles being flexed and relaxed. The leg belt 1000 can adjust the length of the belt 1230 to accommodate both sitting and standing positions. Accordingly, the user can sit down and wear the exoskeleton A, and the user can stand to adjust the length or size of the leg belt 1000 to fit the leg in a standing state.

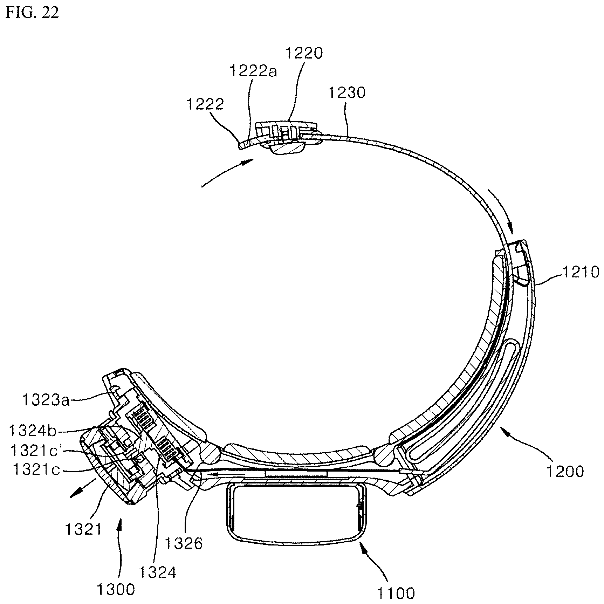

FIG. 22 may be a schematic second state view of the leg belt 1000 shown in FIG. 19. The button dial 1321 may be pulled in an outward direction of the second frame 1310 to unfasten the belt buckle 1220. The latch stick 1323a may be taken off the slit 1222a of the buckle plate 1222. Further, when the button dial 1321 is moved, the projection hole 1321c' of the inner disc 1321c may be uncoupled from the projection 1324b of the wire reel 1324.

The wire reel 1324 may be rotated by a restoring force of the plate spring 1325. By a rotation of the wire reel 1324, the wire 1326 may be wound on the wire reel 1324. As shown by an arrow in FIG. 22, the belt 1230 may be retracted to an inside of the first frame 1210, where it may be stored. As the belt 1230 may be automatically wound by a simple operation of the button dial 1321, the user can quickly and simply unbuckle the leg belt 1000.Further, when the leg belt 1000 is not used, the belt 1230 may be stored in the first frame 1210. Accordingly, contamination and damage to the belt 1230 may be prevented.

Although FIGS. 19 to 22 show a detailed configuration of wire winder, buckle, and belt of a leg belt, the leg belt in accordance with another embodiment of this application may be realized in the same manner as in FIGS. 19 to 22.

It is to be understood that the above-described embodiment is illustrative and not restrictive in all respects, and the scope of this application will be indicated by the claims to be described later, rather than by the above-mentioned detailed description. The meaning and the range of claims to be described later and all such modifications and changeable forms derived from the equivalent concept are included in the scope of this disclosures. Embodiments disclosed herein may provide a wearable assistive device capable of adjusting a leg belt in a thickness or width direction of a leg of a user; thus, a user may wear the wearable assistive device regardless of a thickness of the leg of the user. The leg may be supported so that the leg closely contacts the leg belt at both sides.

Embodiments disclosed herein provide a power assisting robot or wearable assistive device, e.g., exoskeleton, in which a rehabilitation patient, worker, military personnel, etc. can adjust and safely use a leg supporting portion or leg belt. Embodiments disclosed herein may prevent an excessive displacement of the leg belt in advance and expand a use of the wearable assistive device by using a structure such that the leg belt may be rotated in an inward or an outward direction and such that a rotation range may be limited by a stopper.

Embodiments disclosed herein may provide a power assisting robot or a wearable assistive device that a user may wear for a long time and have a sense of stability. Embodiments disclosed herein may disperse a force to support a leg of the user and provide a sense of stability and comfort to the user by using a structure that supports a leg to a center of a leg belt, and supports the leg at both sides.

Embodiments disclosed herein are not limited to the above-mentioned objects, and the other objects and the advantages of disclosed embodiments, which are not mentioned, can be understood by the following description, and more clearly understood by the embodiments of this application. It will be also readily seen that the objects and the advantages of this application may be realized by means indicated in the patent claims and a combination thereof.

The power assisting robot or the wearable assistive device may include a leg fixing portion or leg belt having a supporting structure that is adjusted in the thickness or width direction of the leg of the user. Embodiments disclosed herein may include a first sub supporting structure or a first support that is coupled to a first side of a main supporting structure or a main support by a hinge joint, and a second sub supporting structure or a second support that is coupled to a second side of a main support by a hinge joint. By an elastic member, the first support and the second support may be coupled to the main support. As a result, the supporting structure may be adjusted in the thickness or width direction of the leg of the user and support the leg on both sides.

The wearable assistive device may include a leg fixing portion or leg belt that is rotated in the inward or downward direction, or in the outward direction. That is, the leg belt may be rotatably coupled to a leg frame or leg connector of the wearable assistive device. As a result, as the supporting structure of the leg belt may be adjusted in inward direction or outward directions so that the user may expand his range of motion. The leg belt may include a stopper that limits a rotation range about the leg frame. As a result, the supporting structure can improve a safety and stability of the user by limiting the rotation range.

The wearable assistive device may include a leg fixing portion or leg belt to support a leg at both sides so as to create stability. Embodiments disclosed herein may include a first sub supporting structure or first support that is coupled to one or a first side of a main supporting structure or a main support by a hinge joint, and a second sub supporting structure or a second support that is coupled to the other or a second side of the main supporting structure by a hinge joint. As a result, the leg belt can improve asense of stability and comfort as the leg is supported on the main support, and as the leg is supported at both sides by the first support and the second support.

In the leg belt, the first support and the second support may be rotated about the main support. The leg belt may be adjusted in accordance with the thickness of a leg of the user. Accordingly, the wearable assistive device may be used by people of all ages and/or everyone regardless of the thickness of the leg of the user. Further, as the first support and the second support are elastically supported on the main support, they may closely contact the leg of the user. Accordingly, the wearable assistive device may be easy to wear, improving convenience.

The leg belt may be rotated in the inward direction or the outward direction of both feet of the user. Accordingly, the leg belt of the wearable assistive device may more accurately be adjusted to fit the leg of the user. Rehabilitation, workers who need extra assistance, military personnel, etc., who may have afoot bent in the inward direction or the outward direction of both feet can adjust and use the leg belt in accordance with their body shapes. Accordingly, it is possible to minimize the range of people who can use the wearable assistive device. Further, in a rotation of the leg belt, a range of change that is rotated by the stopper may be limited. Accordingly, even when the user falls down while wearing the wearable assistive device or when an external force is applied, any damage that may occur due to an excessive displacement of the leg belt can be prevented in advance, increasing safety.

In the leg belt, the leg may be supported on the main support, and the first support and the second support may support both sides of the leg. Accordingly, the leg belt can support the leg more stably. Further, the user can wear the leg belt for long time and maintain a sense of stability.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A wearable assistive device, comprising:
a main frame (4, 1110, 2110) configured to support a waist; and
a leg assembly (6) that extends from the main frame (4, 1110, 2110), the leg assembly (6) having a leg frame (6a, 6d) connected to the main frame (4, 1110, 2110) and a leg belt (6c, 6e, 100, 1000, 2000), wherein the leg belt (6c, 6e, 100, 1000, 2000) includes:
a main support (110, 1100, 2100),
a strap configured to be stored in the main support (110, 1100, 2100),
a belt buckle (1220, 2220) coupled to an end of the strap that withdraws the strap from the main support (110, 1100, 2100), and
a winder (1320) configured to fasten the belt buckle (1220, 2220) and retract the strap when the belt buckle (1220, 2220) is unfastened from the winder (1320).

2. The wearable assistive device of claim 1, wherein the winder (1320) and a first hinge knuckle (1211a, 2111) is provided on a first support (1200, 2200), and the first hinge knuckle (1211a, 2111) is configured to couple to a first hinge bracket (1111a, 2121) formed on a first side of the main support (110, 1100, 2100).

3. The wearable assistive device of claim 2, wherein the main support (110, 1100, 2100) comprises a first elastic member (1111c) provided between the first hinge bracket (1111a, 2121) and the first hinge knuckle (1211a, 2111),
wherein the main support (110, 1100, 2100) comprises a coupling frame (1120, 2120) that is coupled to the leg frame (6a, 6d), and a main frame (4, 1110, 2110) that is coupled to the coupling frame (1120, 2120) and formed with the first hinge bracket (1111a, 2121).

4. The wearable assistive device of claim 3, wherein the main frame (4; 1110, 2110) comprises an inner main frame (1110a) and an outer main frame (1110b) coupled to each other, wherein the first hinge bracket (1111a, 2121) is formed on a first side of the inner main frame (1110a), and wherein a first stopper (1113a) is formed at a first end of the outer main frame (1110b) to limit a rotation of the first support (1200, 2200).

5. The wearable assistive device of claim 4, wherein the first stopper (1113a) is projected to an outer side of the outer main frame (1110b) to oppose the first hinge bracket (1111a, 2121), and the second stopper (1114a) is projected to an outer side of the outer main frame (1110b) to oppose the second hinge bracket (1112a).

6. The wearable assistive device of any one of claims 2 to 5, wherein the first support (1200, 2200) comprises a first frame (1210) having an inner first frame (1210a) and an outer first frame (1210b) coupled to each other, and wherein the first hinge knuckle (1211a, 2111) is formed at a first end of the inner first frame (1210a).

7. The wearable assistive device of any one of claims 2 to 6, further including a second support (1300, 2300) having a second hinge knuckle (1311a) configured to rotatably couple to a second hinge bracket (1112a) provided on the main frame (4, 1110, 2110),
wherein the second support (1300, 2300) comprises a second frame (1310) having an inner second frame (1310a) and an outer second frame (1310b) coupled to each other, and the second hinge knuckle (1311a) is formed at a first end of the inner second frame (1310a).

8. The wearable assistive device of claim 7, wherein a second elastic member (1112c) is provided between the second hinge bracket (1112a) and the second hinge knuckle (1311a), and a second stopper (1114a) is formed on the main frame (4, 1110, 2110) to limit a rotation of the second support (1300, 2300).

9. A wearable assistive device, comprising:
a main frame (4, 1110, 2110) configured to support a waist or trunk;
a leg assembly (6) that extends from an end of the main frame (4, 1110, 2110);
at least one belt assembly (100) coupled to at least one of the main frame (4, 1110, 2110) or the leg assembly (6), the belt assembly (100) including:
a main support (110, 1100, 2100) where a strap and a wire are stored,
a winder (1320) configured to wind a wire coupled to the strap, and,
a belt buckle (1220, 2220) configured to withdraw the strap from the main support (110, 1100, 2100) and couple to the winder (1320).

10. The wearable assistive device of claim 9, wherein the belt assembly (6c, 6e, 100, 1000, 2000) is a leg belt (6c, 6e, 100, 1000, 2000) comprising a leg connector (1120, 2120) that is coupled to a leg frame (6a, 6d) of the leg assembly (6), and a main support frame (1110, 2110) that is coupled to the leg connector (1120, 2120) by a hinge joint.

11. The wearable assistive device of claim 10, wherein the main support frame (1110, 2110) is formed with a hinge knuckle (2111) and the leg connector (1120, 2120) is formed with a hinge bracket (2121) corresponding to the hinge knuckle (2111), and wherein the hinge knuckle (2111) is rotatably coupled to the hinge bracket (2121) to form the hinge joint, and
further including a stopper projected from the main support frame (1110, 2110) to restrict a rotation of the main support frame (1110, 2110) about the leg connector (1120, 2120).

12. The wearable assistive device of claim 9, wherein the belt assembly (100, 1000, 2000) comprises a main support (110, 1110, 2110), a first support (1200, 2200) that is coupled to a first side of the main support by a first hinge joint, and a second support (1300, 2300) that is coupled to a second side of the main support (110, 1110, 2110) by a second hinge joint.

13. The wearable assistive device of claim 12, wherein a first hinge bracket (1111a, 2121) is formed on the first side of the main support (110, 1110, 2110) and a second hinge bracket (1112a) is formed on the second side of the main support (110, 1110, 2110), wherein the first support (1200, 2200) includes a first hinge knuckle (1211a, 2111) configured to couple to the first hinge bracket (1111a, 2121) to form the first hinge joint, and the second support (1300, 2300) includes a second hinge knuckle (1311a) configured to couple to the second hinge bracket (1112a) to form the second hinge joint, and wherein the main support (110, 1110, 2110) comprises a first elastic member (1111c) provided between the first hinge knuckle (1211a, 2111) and the first hinge bracket (1111a, 2121) and a second elastic member (1112c) provided between the second hinge knuckle (1311a) and the second hinge bracket (1112a).

14. A belt assembly of a wearable assistive device, comprising:
a main support (110, 1100, 2100) that stores a belt;
a belt buckle (1220, 2220) coupled to an end of the belt; and
a winder (1320) including a button dial that is pushed inward to fasten the belt buckle (1220, 2220) and pulled outward to unfasten the belt buckle (1220, 2220), wherein when the belt buckle (1220, 2220) is pulled away from the main support (110, 1100, 2100), the belt is withdrawn from the main support (110, 1100, 2100) and the winder (1320) rotates.

15. The belt assembly of the wearable assistive device of claim 14, further including a sub-support (120) that includes the winder (1320) and at least one hinge knuckle (1211a, 2111; 1311a) configured to rotatably couple to at least one hinge bracket (1111a, 2121; 1112a) provided in the main support (110, 1100, 2100), wherein an elastic member (1111c; 1112c) is provided between the at least one hinge knuckle (1211a, 2111; 1311a) and the at least one hinge bracket (1111a, 2121; 1112a),
wherein the main support (110, 1100, 2100) comprises a leg coupling frame (1120, 2120) and a main support frame (1110, 2110) that are coupled to a leg assembly (6) of the wearable assistive device, the main support frame (1110, 2110) having an inner main frame (1110a) and an outer main frame (1110b) that are coupled to each other,
wherein at least one hinge knuckle (1211a, 2111; 1311a) of the main support (110, 1100, 2100) is formed at an end of the inner main frame (1110a),
wherein at least one stopper (1113a; 1114a) is formed at an end of the outer main frame (1110b) to restrict a rotation of the sub-support (120), and
wherein a third stopper is projected from the main support frame (1110, 2110) to restrict a rotation of the main support frame (1110, 2110) about the leg coupling frame (1120, 2120).
